# EUROPÄISCHE PATENTSCHRIFT

(11) **EP 2 298 144 B1**
(45) Veröffentlichungstag und Bekanntmachung des Hinweises auf die Patenterteilung: **03.04.2013**
(21) Anmeldenummer: 10175058.6
(22) Anmeldetag: 02.09.2010
(51) Int. Cl.: A47J 43/07

(54) **Gefäß, insbesondere Rührgefäß für eine Küchenmaschine**
Container, in particular mixing container for a kitchen appliance
Récipient, notamment récipient de mélange pour une machine de cuisine

(30) Priorität: 16.09.2009 DE 102009041727
(43) Veröffentlichungstag der Anmeldung: 23.03.2011
(73) Patentinhaber: Vorwerk & Co. Interholding GmbH, 42275 Wuppertal (DE)
(72) Erfinder: Arnold, Hans-Peter, 58566 Kierspe (DE); Degen-Braun, Barbara, 42327 Wuppertal (DE); Brech, Oliver, 44532 Lünen (DE)
(74) Vertreter: Müller, Enno

(56) Entgegenhaltungen:
- EP-A2- 1 878 366
- WO-A1-00/13563
- WO-A2-02/13622

## Beschreibung

Die Erfindung betrifft ein Gefäß, insbesondere Rührgefäß für eine Küchenmaschine, nach den Merkmalen des Oberbegriffes des Anspruches 1.

Gefäße der in Rede stehenden Art sind bekannt, so beispielsweise in Form üblicher Kochgefäße, weiter in Form von Rührgefäßen für eine Küchenmaschine. Derartige Rührgefäße für Küchenmaschinen weisen in der Regel bodenseitig ein über die Küchenmaschine antreibbares Rührwerk auf und ist weiter mittels eines Deckels verschließbar, weiter bevorzugt dichtend verschließbar, dies insbesondere im Zusammenwirkungsbereich von Gefäßrand und Deckelrand. In diesem Zusammenhang ist es weiter bekannt, zum Öffnen des Deckels diesen randseitig am Gefäß anzuscharnieren, dies gegebenenfalls unter Zwischenschaltung eines Zusatzteils.

Aus der EP 1878 366 A2 ist ein Gefäß bekannt, bei welchem ein Deckel mit einem Übergreifabschnitt ausgebildet ist. Es ist jedoch nicht möglich, den Deckel in eine am Gefäßrand abgestützte stabile Aufstellstellung zu verbringen.

Ausgehend von dem genannten Stand der Technik beschäftigt sich die Erfindung mit der Aufgabe, ein Gefäß der in Rede stehenden Art hinsichtlich der Deckelzuordnung zu dem Gefäß insbesondere betreffend die Deckelöffnungsstellung zu verbessern.

Diese Aufgabe ist beim Gegenstand des Anspruches 1 gelöst, wobei darauf abgestellt ist, dass oberhalb des Gefäßrandes im Verschlusszustand ebenfalls ein Freiraum verbleibt, dessen Radialerstreckung mindestens der Hälfte der freikragenden Länge des Gefäßrandes entspricht. Zusammen mit dem Stützabschnitt, der im Deckelverschlusszustand im Gefäßinneren zur Anlage kommt, wobei die Anlagebereiche von Übergreifabschnitt und Stützabschnitt höhenmäßig versetzt sind und im Anlagezustand oberhalb des Stützabschnitts zu dem Gefäßrand ein radialer Freiraum verbleibt, ergibt sich aufgrund des Freiraumes oberhalb des Gefäßrandes im Verschlusszustand eine günstige Zuordnungsmöglichkeit im Hinblick auf eine stabile Öffnungsstellung des Deckels. Zufolge dieser Ausgestaltung ist ein Gefäß angegeben, welches hinsichtlich der Zuordnung des Deckels zum Gefäß jedenfalls in der Deckeloffenstellung verbessert ist. Es kann sich auch eine Verbesserung in der Deckelverschlussstellung ergeben. Es ist entsprechend im Deckelverschlusszustand eine bevorzugt doppelte Abstützung des Deckels am Gefäß, insbesondere im Bereich des Gefäßrandes erreicht, so zum einen mittels des den Gefäßrand übergreifenden, gegebenenfalls sich auf diesem oder im Bereich des Deckelrand-Außenrandes abstützenden Deckel-Übergreifabschnitt sowie durch den weiter vorgesehenen Stützabschnitt des Deckels. Letzterer wirkt bevorzugt mit der Fläche der Gefäßinnenwandung zusammen, weiter bevorzugt mit einer Gefäßinnenfläche, die tendenziell dem freien Gefäßrand zugeordnet ist, jedoch weiter zu der Ebene der Gefäßöffnung höhenmäßig versetzt ist. Dieser höhenmäßige Versatz spiegelt sich in der Anordnung von Stützabschnitt und Übergreifabschnitt des Deckels wieder. Der im Anlagezustand oberhalb des Stützabschnittes zu dem Gefäßrand verbleibende radiale Freiraum bietet eine günstige Lösung zum freien Verbringen des Deckels aus der Deckelverschlussstellung in die Deckeloffenstellung, bevorzugt durch eine durch den Benutzer herbeigeführte Aufschwenkbewegung des Deckels, gegebenenfalls unter Einhergehen mit einem vertikalen Anheben des Deckels gegenüber dem Rührgefäß. Weiter bietet der verbleibende radiale Freiraum in der Deckeloffenstellung weiter den benutzerfreundlichen Vorteil eines Aufstellens des Deckels an dem Rührgefäß durch Umfassen des Gefäßrandes mittels der deckelseitigen Stütz- und Übergreifabschnitte, wobei weiter der im Deckelverschlusszustand und weiter im Betrieb des Gefäßes - beispielsweise beim Kochen - mediumbeaufschlagte, deckelinnenseitige Stützabschnitt entsprechend auch in der Deckeloffenstellung innerhalb des Gefäßquerschnittes verbleibt, so dass in der Deckeloffenstellung von der Deckelinnenseite beispielsweise ablaufendes Kondensat über den Stützabschnitt zurück in das Gefäß tropfen kann. Einer Verunreinigung der Gefäßaußenwandung, weiter der Aufstellfläche für das Gefäß ist so in konstruktiv einfacher Weise entgegengewirkt. Der radiale Freiraum oberhalb des Stützabschnittes weist im Deckelverschlusszustand ein Radialmaß auf, welches zumindest der Hälfte der freikragenden Radiallänge des Gefäßrandes entspricht, weiter bevorzugt dem 0,5- bis 2-Fachen, weiter bevorzugt dem 0,8- bis 1,5-Fachen, weiter bevorzugt etwa dem 1-Fachen.

Der oberhalb des Gefäßrandes im Verschlusszustand verbleibende Freiraum weist eine Radialerstreckung auf, die mindestens der Hälfte der freikragenden Länge des Gefäßrandes entspricht. Dieser Freiraum unterstützt in günstiger Weise die Aufstellung des Deckels infolge einer bevorzugten Schwenkbewegung um eine quer zur Gefäßachse orientierten, konstruktiv bevorzugt nicht vorgegebene Schwenkachse. Weiter bietet dieser Freiraum, gegebenenfalls zusätzlich zu dem oberhalb des Stützabschnittes verbleibenden radialen Freiraum, weiter auch alternativ zu dem radialen Freiraum die Möglichkeit der Anordnung einer Deckeldichtung, die insbesondere im Deckelverschlusszustand mit dem Deckelrand zusammenwirkt. Bevorzugt entspricht die Radialerstreckung dieses weiteren Freiraumes oberhalb des Gefäßrandes dem 0,5- bis 3-Fachen, weiter bevorzugt dem 1- bis 2-Fachen der freikragenden Gefäßrandlänge.

Durch die vorgesehenen Freiräume, die bevorzugt im Querschnitt des Deckels zumindest von dem Übergreifabschnitt und dem Stützabschnitt flankiert werden, ist ein Schwenkraum für den nach außen abgewinkelten Gefäßrand gegeben, so dass eine günstige Handhabung zum Aufstellen des Deckels aus der Deckelverschlussstellung in die Deckeloffenstellung und ein Rückschwenken erreicht werden kann, ohne dass - wie weiter bevorzugt - konstruktive Schwenkmittel, wie beispielsweise eine Achse, vorgesehen sind. Entsprechend ist bevorzugt keine konstruktive Anbindung des Deckels an dem Gefäß vorgesehen, so dass der Benutzer frei wählen kann, ob er den Deckel gänzlich vom Gefäß abnimmt oder unter Zuhilfenahme des Gefäßrandes aufstellt, welche Deckel-Aufstellstellung bevorzugt selbsthaltend ist.

In diesem Zusammenhang ist weiter bevorzugt, dass der Profilinnenraum mit solchen radialen und vertikalen Abmessungen versehen ist, dass bei einem Aufstellen des Deckels relativ zum Gefäß jedenfalls in einer ausgewählten Stellung der Außenrand des Gefäßrandes und ein Innenbereich des Gefäßrandes zugleich an diesbezüglichen Bereichen des Profilinnenraumes in Anlage sind, wobei zufolge einer Verklemmung in einer solchen ausgewählten Stellung eine stabile Öffnungsstellung des Deckels erreicht ist. Diese stabile Öffnungsstellung ist in bevorzugter Ausgestaltung eine senkrechte Stellung des Deckels, d. h. eine Stellung, in welcher eine Deckelebene in einem 90°-Winkel angestellt ist zu der Gefäßöffnungsebene. Auch weitere Deckelöffnungsstellungen sind diesbezüglich möglich, wobei weiter auch diese Öffnungsstellungen in bevorzugter Ausgestaltung stabil sind, d. h. nur durch Benutzereingriff aufhebbar sind. So betrifft weiter bevorzugt die stabile Öffnungsstellung des Deckels eine (weiter mit Bezug zu den Ebenen von Deckel und Gefäßrandöffnung) 30°-, 45°- oder auch 75°-Stellung, wobei weiter bevorzugt auch jede weitere Öffnungsstellung zwischen einer 0°-Stellung (Deckelverschlussstellung) und einer 90°-Stellung stabil ist, gegebenenfalls weiter auch Öffnungsstellungen über die 90°-Stellung hinaus, beispielsweise eine 100°- oder 115°-Stellung des Deckels. Die stabile Öffnungsstellung des Deckels ist bevorzugt durch den Benutzer hinsichtlich der Winkelstellung zur Gefäßöffnungsebene frei wählbar. So kann beispielsweise eine 15°-Öffnungsstellung gewählt werden, um weiter beispielsweise einem Überkochen des in dem Gefäß befindlichen Garguts entgegenzuwirken. Die 90°-Stellung wird beispielsweise genutzt um freien Zustand zum Gefäßinneren zu haben, beispielsweise zum Rühren, Zusetzen weiterer Zutaten oder auch Entnahme des Garguts.

Die stabile Öffnungsstellung ist erreicht durch Verklemmung, wobei sich der Außenrand des Gefäßrandes und ein Innenbereich des Gefäßrandes zugleich an zugeordneten und zugewandten Abschnitten des Deckel-Profilinnenraumes abstützen, so weiter bevorzugt unter Anlage des Gefäß-Außenrandes an dem Übergreifabschnitt und des Innenbereiches des Gefäßrandes an dem Stützabschnitt, wobei weiter bevorzugt die Abstützbereiche höhenmäßig zueinander versetzt sind.

In dem Übergreifabschnitt sind in weiter bevorzugter Ausgestaltung eine in den Profilinnenraum ragende Auswölbung ausgebildet, die im Verschlusszustand ohne Eingriff mit dem Gefäßrand ist. Entsprechend ragt diese Auswölbung im Deckelverschlusszustand frei in den Profilinnenraum ein, weiter bevorzugt frei in den oberhalb des Gefäßrandes im Verschlusszustand verbleibenden Freiraum. Es kann diesbezüglich weiter vorgesehen sein, dass über den Umfang des Deckelrandes vereinzelte, weitere bevorzugt gleichmäßig verteilt angeordnete Auswölbungen vorgesehen sind. Alternativ ist, wie weiter bevorzugt, vorgesehen die Auswölbung umlaufend in dem Übergreifabschnitt auszubilden.

Diese Auswölbung wird weiter bevorzugt dahingehend genutzt, dass in einer ausgewählten Öffnungsstellung des Deckels die Abwinklung des Gefäßrandes die Auswölbung hintergreift und somit in bevorzugter Ausgestaltung die gewählte Deckelöffnungsstellung sichert. Das Radialfreikragmaß des Gefäßrandes sowie das radiale Freimaß des über dem Gefäßrand ausgeformten Freiraumes und das Erstreckungsmaß der Auswölbung in den Profilinnenraum bestimmen hierbei den Festsitz bzw. das Überrastmoment, welches weiter so gewählt ist, dass es durch einfache Deckelschwenkbewegung gegenüber dem Gefäßrand durch den Benutzer auslösbar ist. Der Benutzer fühlt bevorzugt das Überlaufen der in den Profilinnenraum ragenden Auswölbung, so dass diesem die erreichte stabile Öffnungsstellung des Deckels vermittelt wird.

Die Anlagebereiche des Übergreifabschnittes und des Stützabschnittes weisen einen mindestens dem Maß des freikragenden Gefäßrandes entsprechenden Radialabstand zueinander auf, weiter bevorzugt zuzüglich der Wandstärke des Gefäßrandes, so dass in bevorzugter Ausgestaltung insbesondere in der Deckelverschlussstellung eine Abstützung des Stützabschnittes wandungsinnenseitig des Gefäßrandes erreicht ist und eine Abstützung des deckelseitigen Übergreifabschnittes radial außen am Außenrand des freikragenden Gefäßrandes bzw. der freikragenden Abwinklung.

Weiter ist bevorzugt, dass die Kontaktzonen am Deckel übereinander, vorzugsweise vertikal übereinander angeordnet sind, während die Kontaktzonen am Gefäß nebeneinander, bevorzugt horizontal nebeneinander angeordnet sind. Alle Kontaktzonen sind weiter vorzugsweise außerhalb des mit Medium benetzten Bereiches angeordnet.

In einer Weiterbildung des Erfindungsgegenstandes ist vorgesehen, dass der Gefäßrand unterhalb der freikragenden Abwinklung einen stufenartig nach innen gehenden Rücksprung aufweist. Dieser Rücksprung formt im Querschnitt eine Stufe aus, deren Stufenfläche vertikal versetzt ist zu dem freikragenden Gefäßrand, wobei die Flächen von freikragendem Gefäßrand und Stufe parallel oder zumindest annähernd parallel verlaufen. Bevorzugt ist diesbezüglich weiter eine Horizontalausrichtung der Stufenfläche, d. h. eine Ausrichtung quer zur Gefäßlängsachse, wohingegen der Gefäßrand in einem Querschnitt einen spitzen Winkel von 2 bis 15°, beispielsweise 10° zu einer Horizontalen einnimmt, dies weiter unter Ausbildung einer nach radial innen abfallenden Fläche. Weiter bevorzugt erstreckt sich unterhalb der Stufe, weiter ausgehend von der radial inneren Stufenrandkante nach vertikal unten die gegebenenfalls mediumbeaufschlagte Gefäßwandung.

Der Stützabschnitt des Deckels ist in bevorzugter Ausgestaltung in der Deckelverschlussstellung auf der inneren Stufenfläche (bevorzugt Horizontalfläche) des Rücksprungs angeordnet. Hierbei sitzt der Stützabschnitt in der Deckelverschlussstellung in einer bevorzugten Ausgestaltung auf der Stufenfläche auf. Auch kann der Stützabschnitt sich mit geringem vertikalen Abstand oberhalb der Stufenfläche erstrecken, beispielsweise mit einem vertikalen Abstand von 1 bis 5 mm, wobei in diesem Fall eine Abstützung des Deckels im Deckelverschlusszustand allein über den Übergreifabschnitt unter Abstützung am Gefäßrand erreicht ist.

Bevorzugt ist weiter, dass der Stützabschnitt des Deckels in der Deckelverschlussstellung im Querschnitt in der Stufeninnenecke des Rücksprunges sitzt, so dass weiter bevorzugt in der Deckelverschlussstellung der Stützabschnitt sich sowohl in vertikaler Richtung auf der Stufenfläche als auch in radialer Richtung an der Innenwandung der zugeordneten Gefäßrandwandung abstützt. Die Anordnung des Stützabschnittes im Querschnitt in der Stufeninnenecke kann weiter auch so gewählt sein, dass ein geringer radialer Abstand zur zugeordneten Gefäßrandwandung und/oder ein geringer vertikaler Abstand zur zugeordneten Stufenfläche belassen ist, welche Abstände bevorzugt 1 bis 5 mm, weiter bevorzugt weniger als 3 mm, weiter bevorzugt weniger als 1 mm sind.

Die Handhabung des Deckels insbesondere das Aufschwenken bzw. Aufstellen in die Deckeloffenstellung bzw. das Abschwenken bzw. Aufsetzen in die Deckelverschlussstellung kann weiter durch Ausprägung einer oder mehrerer der vorbeschriebenen Kontaktzonen als elastisches Element begünstigt sein. So ist diesbezüglich beispielsweise vorgesehen, dass zumindest ein Teilbereich des Stützabschnittes und/oder des Übergreifabschnittes aus einem Weichkunststoff besteht, weiter bevorzugt aus einem elastischen Weichkunststoff. Besonders im Zusammenhang mit einem Deckel aus einem Kunststoffmaterial, insbesondere Hartkunststoffmaterial bietet sich hier eine Lösung an durch Herstellung im Zwei-Komponenten-Spritzverfahren. Die hierdurch geschaffenen Weichzonen sind insbesondere in den Bereichen, weiter insbesondere im Stützabschnitt ausgeformt, die in Kontakt treten zu den zugewandten Bereichen des Gefäßrandes. Hierdurch ist in einer bevorzugten Weiterbildung insbesondere bei Ausbildung eines Teilbereiches des Stützabschnittes aus einem Weichkunststoff diese Weichzone zugleich als Dichtelement ausgebildet, zur Zusammenwirkung mit einem zugeordneten Gefäßrandabschnitt insbesondere in der Deckelverschlussstellung.

Zudem kann auch kombinativ hierzu oder auch alternativ die Auswölbung aus einem derartigen Weichkunststoff bestehen, so weiter beispielsweise bei Ausführung des Deckels als Kunststoff-Spritzteil durch entsprechendes Anspritzen eines Weichkunststoffes an der, dem Profilinnenraum zugewandten Seite des Übergreifabschnittes. Hierdurch kann das zerstörungsfreie Überrasten zur Erlangung der stabilen Deckelöffnungsstellung weiter verbessert werden.

Auch die Anordnung federnder oder elastischer Ringelemente können den Aufstellsitz durch einen reinen Klemmsitz ermöglichen (Gummiquetscher).

Weiter ist bevorzugt, dass die bevorzugt vorgesehenen Dichtflächen beim Abstellen des Deckels, insbesondere beim Aufstellen des Deckels und Festlegung desselben am Gefäßrand nicht verunreinigt werden, so insbesondere durch vom Deckel ablaufendes Medium.

Weiter bevorzugt weist der Profilinnenraum des Deckels (bevorzugt unter Nichtberücksichtigung des in den Profilinnenraum einragenden Querschnitts der Auswölbung) eine an einem Dreieck orientierte Querschnittsfläche auf, welche Querschnittsfläche im Wesentlichen definiert ist durch den Übergreifabschnitt und den winklig hierzu angestellten Stützabschnitt, welche Abschnitte zwei Schenkel des Dreiecks formen, während der dritte Schenkel des Dreiecks eine gedachte Linie zwischen dem im Querschnitt freien Rand des Übergreifabschnittes und dem freien Rand des Stützabschnittes gebildet ist. Das beschriebene Dreieck der Querschnittsfläche ist hierbei bevorzugt nicht streng geometrischer Natur, sondern weist vielmehr bevorzugt mit Bezug auf die Dreieckschenkel Vor- und Rücksprünge auf, so beispielsweise durch die bevorzugt vorgesehene Auswölbung.

Besonders vorteilhaft erweist sich eine Weiterbildung, bei welcher der Gefäßrand und der Deckelrand rotationssymmetrisch ausgebildet sind. So sind Deckel und Gefäßrand in jeder beliebigen Rotationsrichtung miteinander kombinierbar. Die Aufstellposition des Deckels am Gefäß ist in ungerichteter Position möglich, wobei bevorzugt eine unbegrenzte Anzahl von Aufstellkombinationen erreichbar ist. Die notwendigen Geometrien zur Aufstellfunktion sind außerhalb des Mediumraumes angeordnet, wobei das gegebenenfalls am Deckel befindliche Medium in der Deckeloffenstellung in das Innere des Gefäßes zurückgeführt wird. Die zufolge der rotationssymmetrischen Ausgestaltung ringförmig ausgebildeten Kontaktzonen am Gefäß und Deckel sind in ihrer Detailanordnung verantwortlich für den gewünschten Aufstellwinkel.

Die jeweils angegebenen zahlenmäßigen Bandbreiten schließen auch - soweit solche nicht ohnehin exemplarisch angegeben sind - sämtliche Zwischenwerte ein und zwar insbesondere in 1/10-Schritten von der unteren und/oder oberen Grenze auf die jeweils andere Grenze hin eingeschränkt. "Und" steht hierbei dafür, dass beide Grenzen um jeweils ein oder mehrere Zehntel auf die Grenze hin verschoben, d. h. eingegrenzt werden.

Nachstehend ist die Erfindung anhand der beigefügten Zeichnung, welche lediglich zwei Ausführungsbeispiele darstellt, näher erläutert. Es zeigt:
- Fig. 1: in perspektivischer Darstellung ein Gefäß mit einem zuge- ordneten, aufgesetzten Deckel;
- Fig. 2: eine explosionsperspektivische Darstellung von Gefäß und Deckel;
- Fig. 3: den Schnitt gemäß der Schnittebene III-III in Fig. 2;
- Fig. 4: eine der Fig. 3 entsprechende Querschnittsdarstellung, die Deckelverschlussstellung des Gefäßes betreffend;
- Fig. 5: eine perspektivische Darstellung gemäß Fig. 1, jedoch eine Deckeloffenstellung betreffend;
- Fig. 6: eine Querschnittsdarstellung gemäß Fig. 4, jedoch die De- ckeloffenstellung gemäß Fig. 5 betreffend;
- Fig. 7: eine weitere Querschnittsdarstellung die Deckeloffenstel- lung betreffend, jedoch gemäß der Schnittebene VII-VII in Fig. 5;
- Fig. 8: eine weitere der Fig. 4 entsprechend Querschnittsdarstel- lung, jedoch eine alternative Ausgestaltung betreffend.

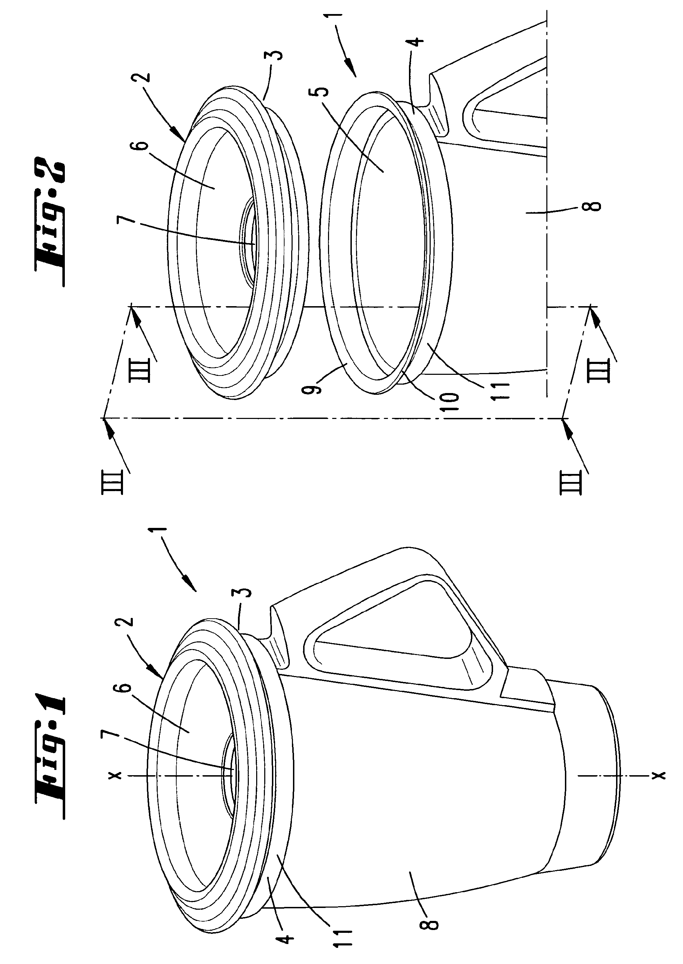

Dargestellt und beschrieben ist zunächst mit Bezug zu Fig. 1 ein Gefäß 1, hier ausgebildet als Rührgefäß für eine Küchenmaschine, beispielsweise für eine Küchenmaschine gemäß DE 10 2005 028 758. Der Inhalt dieser Patentanmeldung wird insbesondere hinsichtlich der Rührgefäßausgestaltung, der Anordnung des Rührgefäßes in der Küchenmaschine sowie der Anordnung und gegebenenfalls einer Verriegelung eines Deckels an dem Rührgefäß vollinhaltlich in die Offenbarung vorliegender Erfindung mit einbezogen, auch zu dem Zweck, Merkmale dieser Patentanmeldung in Ansprüche vorliegender Erfindung mit einzubeziehen.

Das Gefäß 1 ist mit einem dichtend aufsetzbaren Deckel 2 versehbar. Hierzu wirkt im Wesentlichen ein Deckelrand 3 mit einem Gefäßrand 4 zusammen, wobei weiter in der dargestellten Ausführungsform Deckelrand 3 und Gefäßrand 4 rotationssymmetrisch zu einer Gefäß-Vertikalachse x ausgebildet sind. Entsprechend der Ausbildung in vorbenannter Patentanmeldung ist der Deckel 2 relativ zu dem Gefäß 1 verdrehbar, um so eine bevorzugt rastbare Deckelsicherung an dem Gefäß 1 zu erreichen. Hierzu kann der Deckel 2, wenngleich nicht dargestellt, deckelrandaußenseitig radial abregende, weiter bevorzugt diametral gegenüberliegend angeordnete Kragenabschnitte aufweisen, zur Zusammenwirkung mit entsprechenden Aufnahmen im Küchenmaschinengehäuse. Zur Wirkungsweise wird auf die vorbeschriebene Patentanmeldung verwiesen.

Der Deckel 2 weist weiter bevorzugt einen, die Gefäßöffnung 5 in der Deckelverschlussstellung gemäß Fig. 1 überdeckenden Deckelboden 6 auf. Dieser erstreckt sich in einem Querschnitt ausgehend vom Deckelrand 3 nach radial innen zur Gefäß-Vertikalachse x abfallend. Mittig, d. h. weiter rotationssymmetrisch zur Vertikalachse x ist in dem Deckelboden 6 eine Öffnung 7 vorgesehen, durch welche beispielsweise in der Deckelverschlussstellung weitere Zutaten in das Gefäß 1 eingefüllt werden können.

Das Gefäß 1 weist weiter eine Gefäßwandung 8 auf. An dieser schließt sich, der Ebene der Gefäßöffnung 5 zugewandt, der Gefäßrand 4 an, welcher weiter in dem dargestellten Ausführungsbeispiel sich stufenartig nach radial außen gegenüber dem Bereich der Gefäßwandung 8 vergrößert.

So ist der Gefäßrand 4 zunächst im Bereich seines im Querschnitt betrachteten freien Endes mit einer nach radial außen freikragenden Abwinklung 9 versehen. Deren nach vertikal oben weisende Fläche verläuft ausgehend von einem Außenrand 10 geneigt nach radial innen, wobei in der dargestellten Ausführungsform der Neigungswinkel im Querschnitt etwa dem des Deckelbodens 6 in der Deckelverschlussstellung entspricht.

Radial innen geht die Abwinkelung 9 in einen im Querschnitt - zumindest mit Bezug zu der Innenwandung - vertikal verlaufenden Gefäßrandabschnitt 11 über. Dessen Vertikalmaß entspricht in der dargestellten Ausführungsform etwa dem 1,5-Fachen des Radialfreikragmaß der Abwinklung 9.

Dass der Abwinklung 9 abgewandte, vertikal untere Ende des Gefäßrandabschnittes 11 geht über in einen stufenartig nach innen weisenden Rücksprung 12, dessen Radialerstreckungsmaß etwa der freikragenden Länge b der Abwinklung 9 entspricht. Die vertikal obere Fläche des Rücksprungs erstreckt sich in einer senkrecht zur Vertikalachse x des Gefäßes 1 verlaufenden Ebene, formt hierbei eine ebene Stufenfläche 13 aus.

Der Deckelrand 3 des weiter bevorzugt als Kunststoffspritzteil hergestellten Deckels 2, ist als nach außen offenes Hohlprofil gebildet. So ist zunächst im Querschnitt ein Stützabschnitt 14 vorgesehen. Dieser erstreckt sich in einer Deckelverschlussstellung im Querschnitt zumindest annähernd vertikal, d. h. parallel verlaufend zur Vertikalachse x des Gefäßes 1. Radial innen ist an dem Stützabschnitt 14 der Deckelboden 6 angeformt.

Der sich unterhalb des Deckelbodens 5 erstreckende Bereich des Stützabschnittes 14 verläuft im Querschnitt entlang eines Kreisbogenabschnittes nach radial außen, wobei in dem dargestellten Ausführungsbeispiel ein Viertelkreisabschnitt ausgebildet ist, an dessen freien, nach radial außen weisenden Ende sich ein erneut in vertikaler Richtung nach unten erstreckender Stützfuß 15 des Stützabschnitts 14 anschließt.

Der sich im Querschnitt über den Deckelboden vertikal nach oben hinaus erstreckende Bereich des Stützabschnittes 14 bildet zunächst einen den Deckelboden 6 umlaufenden Stehkragen aus. Dessen nach vertikal oben weisende Ende geht über in einen nach radial außen gerichteten Übergreifabschnitt 16. Dieser verläuft gegenüber einer senkrecht zur Vertikalachse x verlaufenden Horizontalebene in einem spitzen Winkel α von etwa 30° mit einer nach vertikal unten weisenden Neigung. Das freie Ende des Übergreifabschnittes 16 formt einen im Querschnitt hakenartigen Hintergreifabschnitt 17 aus, dessen radial innere Fläche im Querschnitt vertikal, weiter bevorzugt parallel zum Stützabschnitt 14 verläuft.

Etwa im Bereich der im Querschnitt halben Längserstreckung des Übergreifabschnittes 16 ist in diesem eine in den Profilinnenraum 18 einragende Auswölbung 19 ausgebildet. Diese Auswölbung 19 ist in dem dargestellten Ausführungsbeispiel durch eine entsprechende Profiländerung des Hintergreifabschnittes 17 gebildet, wobei weiter die Auswölbung 19 im Querschnitt kreisabschnittförmig gewählt ist. In Erstreckungsrichtung des Hintergreifabschnittes 17 ist sowohl vor als auch hinter der Auswölbung 19 ein geradliniger, gestreckter Bereich des Hintergreifabschnittes 17 belassen.

Das vorbeschriebene Profil des Deckelrandes 3 ist zufolge der rotationssymmetrischen Ausgestaltung des Deckels 2 über den gesamten Umfang des Deckelrandes 3 gegeben.

Alternativ kann insbesondere die Ausgestaltung der Auswölbung 19 so gewählt sein, dass bei insgesamt im Querschnitt geradlinig, gestreckt verlaufendem Übergreifabschnitt 16 die Auswölbung 19 wandungsinnenseitig, dem Profilinnenraum 18 zugewandt angespritzt ist, weiter beispielsweise im Zwei-Komponenten-Spritzverfahren unter Anspritzung eines gegenüber dem Deckelwerkstoff weicheren Kunststoffwerkstoffes. Eine solche Auswölbung 19 kann hierbei gleichfalls rotationssymmetrisch vorgesehen sein.

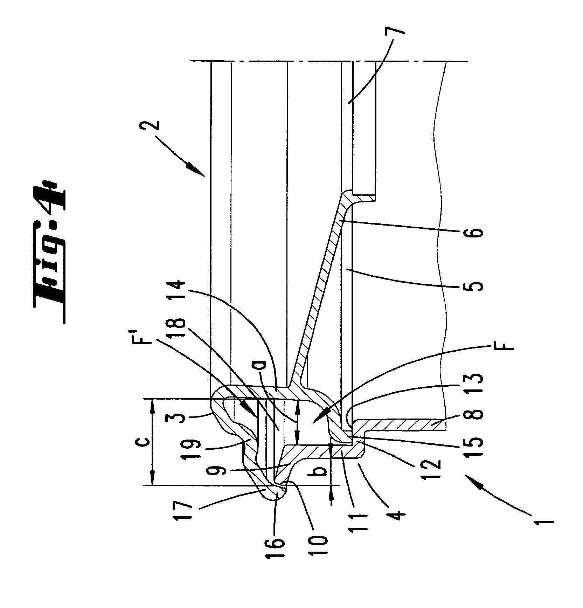

In Fig. 4 ist im Querschnitt die Deckelverschlussstellung dargestellt. Der Deckel sitzt hierbei mittels seines Stützabschnittes 14, insbesondere mittels des Stützfußes 15 gefäßinnenseitig auf der zugeordneten Stufenfläche 13 des deckenrandseitigen Rücksprungs 12 auf. Hierbei ist bevorzugt, dass der Stützfuß 15 in der Stufeninnenecke positioniert ist, was neben der vertikalen Deckelpositionierung auch eine radiale Positionierung desselben bietet. Darüber hinaus kann eine weitere, insbesondere radiale Abstützung im Bereich des gefäßrandseitigen Außenrandes 10 erreicht sein, welcher Außenrand 10 von dem Hintergreifabschnitt 17 des deckelseitigen Übergreifabschnittes 16 umfasst ist.

Die Anlagebereiche von Übergreifabschnitt 16 und Stützabschnitt 14 sind vertikal höhenmäßig versetzt, so um das vertikale Abstandsmaß zwischen Stufenfläche 13 und der von der Abwinklung 9 definierten Öffnungsebene des Gefäße 1.

Zufolge der vorbeschriebenen Profilgestaltung des Deckelrandes 3 ergibt sich im Deckelverschlusszustand gemäß Fig. 4 ein radialer Freiraum F oberhalb des Stützabschnittes 14, insbesondere oberhalb des Stützfußes 15, wobei das radiale Maß a des Freiraumes F zwischen der dem Profilinnenraum 18 zugewandten Innenfläche des Stützabschnittes 14 und der diesem gegenüberliegenden Wandungsinnenfläche des Gefäßrandabschnittes 11 in dem dargestellten Ausführungsbeispiel im Wesentlichen dem Radialmaß b der frei auskragenden Abwinklung 9 entspricht.

Die Freiräume F und F' gehen ineinander über und sind Teile des Profilinnenraumes 18.

Zudem ergibt sich weiter auch oberhalb des Gefäßrandes 4, insbesondere oberhalb der Abwinklung 9 ein weiterer Freiraum F', dessen Radialerstreckung c in dem dargestellten Ausführungsbeispiel etwa dem 2-Fachen des Radialmaßes b der Abwinklung 9 entspricht.

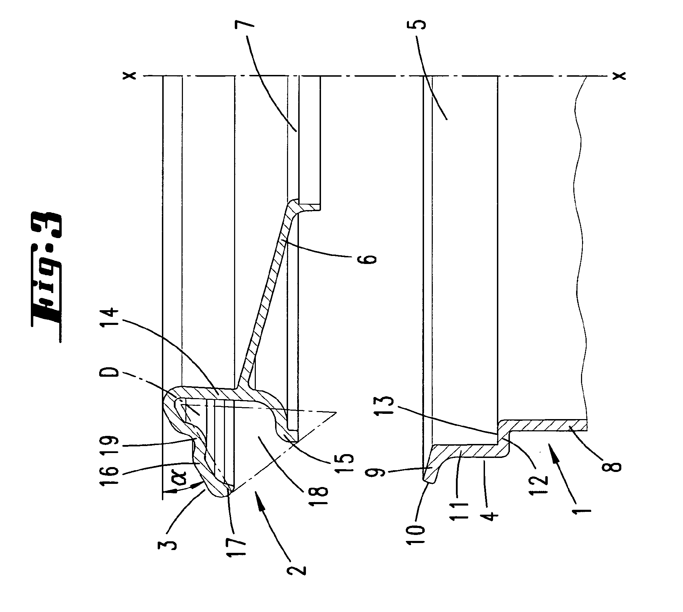

Zufolge der vorbeschriebenen Profilausgestaltungen von Deckelrand und Gefäßrand 4 ergibt sich in der Deckelverschlussstellung ein Einragen des Gefäßrandabschnittes in den Profilinnenraum 18, wobei Letzterer im Querschnitt eine an einem Dreieck orientierte Fläche aufweist, wobei weiter die Dreiecksfläche D (schematisch in Fig. 3 dargestellt) begrenzt ist einerseits durch die Übergreifund Stützabschnitte 14, 16, die entsprechende Dreieckschenkel aufziehen, und andererseits durch eine gedachte Linie, die den stützabschnittseitigen Stützfuß 15 und den übergreifabschnittsseitigen Hintergreifabschnitt 17 verbindet, wenngleich keine strenge dreieckige Geometrie vorliegt, bedingt durch die Vorund Rücksprünge zufolge der Ausgestaltung von Auswölbung 19, Stützfuß 15 sowie dessen Anbindungsbereich an den Stützabschnitt 14 und letztlich durch den Hintergreifabschnitt 17.

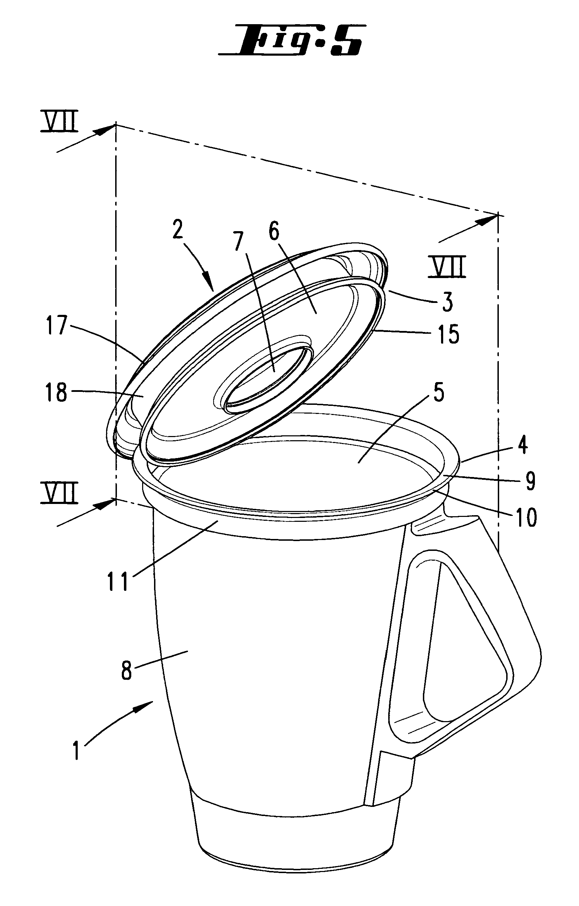

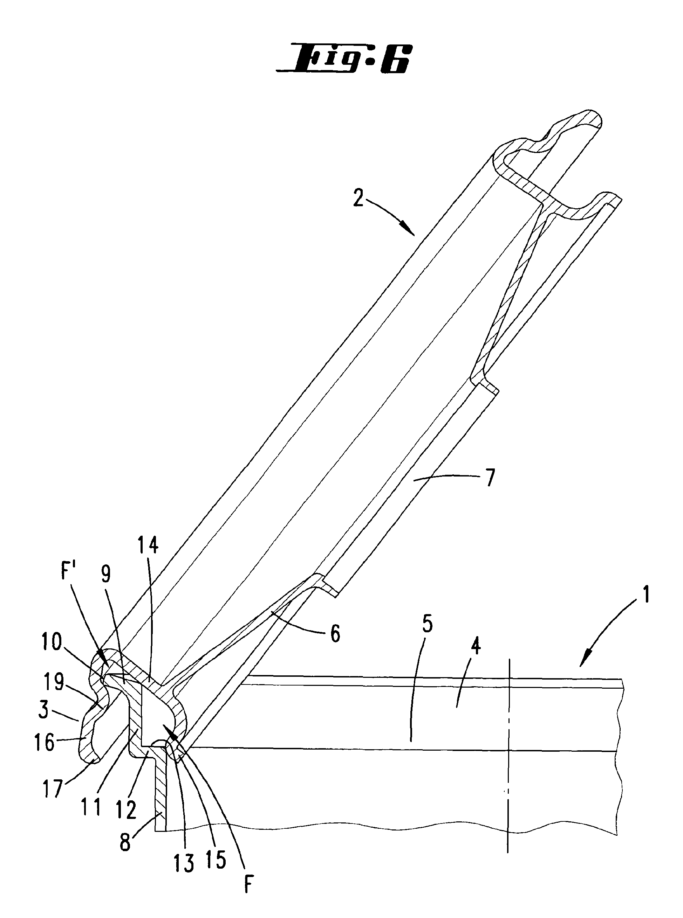

Zum Aufstellen des Deckels 2 (vgl. Fig. 5 und 6 wird dieser relativ zum Gefäß 1 aufgeschwenkt (dies gegebenenfalls zur Aufhebung einer mit einem Gerätegehäuse bajonettartig zusammenwirkenden Deckelsicherung unter vorhergehendem Verdrehen des Deckels 2 um die Vertikalachse x), dies um eine imaginäre Schwenkachse, die innerhalb des Profilinnenraumes 18 oder mit geringem Abstand auch außerhalb desselben, weiter quer zur Vertikalachse x des Gefäßes 1 verläuft. Hierbei ist zufolge der gegebenen Erstreckungen der Freiräume F und F' ein Überlaufen der Auswölbung 19 durch den Außenrand 10 der Abwinklung 9 erreicht, wobei weiter nach einem Überlaufen der Auswölbung 19 die Abwinklung 9 bzw. deren Außenrand 10 die Auswölbung 19 hintergreift. Zugleich sind hierbei der Außenrand 10 der Abwinklung 9 und der Eckbereich im Übergang von der Abwinklung 9 in den vertikal verlaufenden Gefäßrandabschnitt 11 zugleich an diesbezüglichen Bereichen des Profilinnenraumes 18 in Anlage, nämlich hinsichtlich des Außenrandes 10 wandungsinnenseitig des Übergreifabschnittes 16 und hinsichtlich des gefäßrandseitigen Bereiches an der zugewandten Innenwandung des Stützabschnittes 14. Hierdurch ist in Zusammenwirkung mit dem Hintergriff an der Auswölbung 19 eine Verklemmung in der Deckeloffenstellung erreicht, welche eine stabile Öffnungsstellung des Deckels 2 bietet.

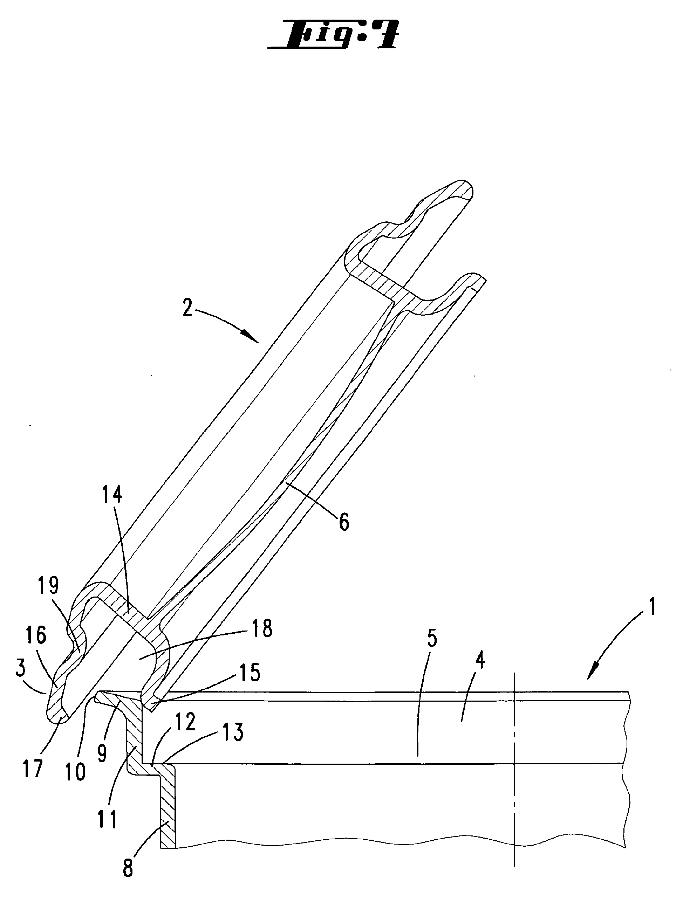

Eine weitere Abstützung ist in zwei weiteren, in entgegengesetzte Richtungen der Umlaufrichtung des Deckelrandes 3 zu der Hintergriffstellung im Bereich der Auswölbung 19 erreicht, indem hier eine weitere Abstützung des Stützabschnittes 14, insbesondere des Stützfußes 15 an der umlaufenden Kontaktzone des Gefäßrandes 4 im Übergangsbereich von der Abwinklung 9 in den Gefäßrandabschnitt 11 gegeben ist (vgl. Fig. 7).

Durch die vorbeschriebene Ausgestaltung ist eine Kombination von Deckel 2 und Gefäß 1 in jeder beliebigen Rotationsrichtung sowohl in der Deckelverschluss- als auch in der Deckeloffenstellung ermöglicht.

Die Kontaktzonen von Deckel 2 und Deckelrand 3 liegen außerhalb des mit Medium benetzten Bereiches des Deckels 2, dies sowohl in der Deckelverschluss- als auch in der Deckeloffenstellung.

Der umlaufende Stützfuß 15 des Deckels 2 bildet in der Deckeloffenstellung eine Abtropfkante, die dem Innenraum des Gefäßes 1 zugewandt ist, so dass die Rückführung etwaigen an der Deckelunterseite befindlichen Mediums in das Gefäß sichergestellt ist.

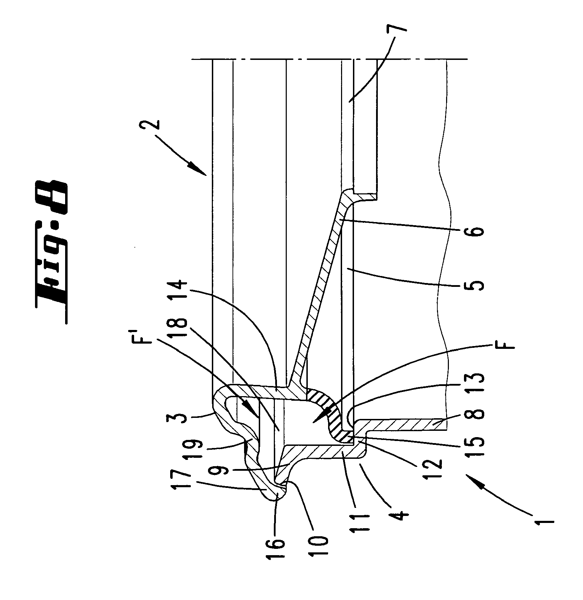

Eine alternative Ausgestaltung zeigt Fig. 8. Hier ist in einer Weiterbildung des Erfindungsgegenstandes der Stützabschnitt 14, insbesondere der sich unterhalb des Deckelbodens 6 erstreckende Abschnitt zusammen mit dem Stützfuß 15 aus einem Weichkunststoff gebildet, insbesondere aus einem elastischen Weichkunststoff. Dieser ist bevorzugt bei Herstellung des Deckels im Kunststoffspritzverfahren angespritzt, so dass eine insgesamt einteilige Ausbildung erreicht ist.

Die flexible Ausgestaltung des Stützabschnittes 14 begünstigt das Aufstellen des Deckels 2 in die Deckeloffenstellung. Das Überlaufen der Auswölbung 19 ist durch ein mögliches Ausweichen des flexiblen Stützabschnittes 14 unterstützt. Weiter ist hierdurch der Stützabschnitt 14, insbesondere der Stützfuß 15 zugleich als Dichtelement ausgebildet.

### BEZUGSZEICHENLISTE:

- 1: Gefäß
- 2: Deckel
- 3: Deckelrand
- 4: Gefäßrand
- 5: Gefäßöffnung
- 6: Deckelboden
- 7: Öffnung
- 8: Gefäßwandung
- 9: Abwinklung
- 10: Außenrand
- 11: Gefäßrandabschnitt
- 12: Rücksprung
- 13: Stufenfläche
- 14: Stützabschnitt
- 15: Stützfuß
- 16: Übergreifabschnitt
- 17: Hintergreifabschnitt
- 18: Profilinnenraum
- 19: Auswölbung

- a: Maß
- b: Maß
- c: Maß
- x: Vertikalachse

- α: Winkel
- D: Dreiecksfläche
- F: Freiraum
- F': Freiraum

## Patentansprüche

1. Gefäß (1), insbesondere Rührgefäß für eine Küchenmaschine mit einem dichtend aufsetzbaren Deckel (2), wobei das Gefäß (1) einen im Querschnitt nach außen abgewinkelten Gefäßrand (4) mit einem Außenrand (10) aufweist und der Deckel (2) einen im Verschlusszustand den Gefäßrand (4) übergreifenden Deckelrand (3), wobei weiter der Deckelrand (3) im Querschnitt einen Übergreifabschnitt (16) aufweist, der Deckelrand (3) weiter im Querschnitt einen Stützabschnitt (14) aufweist, der im Deckelverschlusszustand im Gefäßinneren zur Anlage kommt, die Anlagebereiche von Übergreifabschnitt (16) und Stützabschnitt (14) höhenmäßig versetzt sind und dass im Anlagezustand oberhalb des Stützabschnittes (14) zu dem Gefäßrand (4) ein radialer Freiraum (F) verbleibt, der zumindest der Hälfte der freikragenden Länge (b) des Gefäßrandes (4) entspricht, **dadurch gekennzeichnet, dass** oberhalb des Gefäßrandes (4) im Verschlusszustand ebenfalls ein Freiraum (F') verbleibt, dessen Radialerstreckung (c) mindestens der Hälfte der freikragenden Länge (b) des Gefäßrandes (4) entspricht.

2. Gefäß nach Anspruch 1, **dadurch gekennzeichnet, dass** der Profilinnenraum (18) mit solchen radialen und vertikalen Abmessungen versehen ist, dass bei einem Aufstellen des Deckels relativ zum Gefäß (2) jedenfalls in einer ausgewählten Stellung der Außenrand (10) des Gefäßrandes (4) und ein Innenbereich des Gefäßrandes (4) zugleich an diesbezüglichen Bereichen des Profilinnenraumes (18) in Anlage sind, wobei zufolge einer Verklemmung in einer solchen ausgewählten Stellung eine stabile Öffnungsstellung des Deckels (2) erreicht ist.

3. Gefäß nach einem der vorhergehenden Ansprüche, **dadurch gekennzeichnet, dass** in dem Übergreifabschnitt (16) eine in den Profilinnenraum (18) ragende Auswölbung (19) ausgebildet ist, die im Verschlusszustand ohne Eingriff mit dem Gefäßrand (4) ist.

4. Gefäß nach Anspruch 3, **dadurch gekennzeichnet, dass** in einer ausgewählten Stellung die Abwinklung (9) des Gefäßrandes (4) die Auswölbung (19) hintergreift.

5. Gefäß nach einem der vorhergehenden Ansprüche, **dadurch gekennzeichnet, dass** die Anlagebereiche des Übergreifabschnittes (16) und des Stützabschnittes (14) einen mindestens dem Maß (b) des freikragenden Gefäßrandes (4) entsprechenden Radialabstand zueinander aufweisen.

6. Gefäß nach einem der vorhergehenden Ansprüche, **dadurch gekennzeichnet, dass** die Anlagebereiche des Übergreifabschnittes (16) und des Stützabschnittes (14) einen mindestens dem Maß (b) des freikragenden Gefäßrandes (4) entsprechenden Radialabstand zueinander zuzüglich der Wandstärke des Gefäßrandes (4) aufweisen.

7. Gefäß nach einem der vorhergehenden Ansprüche, **dadurch gekennzeichnet, dass** der Gefäßrand (4) unterhalb der freikragenden Abwinklung (9) einen stufenartig nach innen gehenden Rücksprung (12) aufweist.

8. Gefäß nach Anspruch 7, **dadurch gekennzeichnet, dass** der Stützabschnitt (14) in der Deckelverschlussstellung auf der inneren Stufenfläche (13) des Rücksprunges (12) angeordnet ist.

9. Gefäß nach einem der Ansprüche 7 oder 8, **dadurch gekennzeichnet, dass** der Stützabschnitt (14) in der Deckelverschlussstellung im Querschnitt in der Stufeninnenecke des Rücksprungs (12) sitzt.

10. Gefäß nach einem der vorhergehenden Ansprüche, **dadurch gekennzeichnet, dass** zumindest ein Teilbereich des Stützabschnittes (14) und/oder des Übergreifabschnitts (16) aus einem Weichkunststoff besteht.

11. Gefäß nach einem der Ansprüche 3 bis 10, **dadurch gekennzeichnet, dass** die Auswölbung (19) aus einem Weichkunststoff besteht.

12. Gefäß nach einem der vorhergehenden Ansprüche, **dadurch gekennzeichnet, dass** der Profilinnenraum (18) eine an einem Dreieck orientierte Querschnittsfläche (D) aufweist.

13. Gefäß nach einem der vorhergehenden Ansprüche, **dadurch gekennzeichnet, dass** der Gefäßrand (4) und der Deckelrand (3) rotationssymmetrisch ausgebildet sind.

## Claims

1. Vessel (1), in particular a mixing vessel for a food processor comprising a sealingly attachable lid (2), the vessel (1) having a vessel rim (4) which is bent outwards in cross-section, said vessel rim having an outer rim (10) and the lid (2) having a lid rim (3) which overlaps the vessel rim (4) in the closed state, the lid rim (3) further having an overlap portion (16) in cross-section, the lid rim (3) further having a support portion (14) in cross-section, which support portion comes into contact with the inside of the vessel when the lid is in the closed state, the contact regions of the overlap portion (16) and the support portion (14) being vertically offset and a radial clearance (F) to the vessel rim (4) remaining above the support portion (14) in the contacting state, which clearance corresponds to at least half of the freely projecting length (b) of the vessel rim (4), **characterised in that** a clearance (F') likewise remains above the vessel rim (4) in the closed state, the radial extension (c) of which clearance corresponds to at least half of the freely projecting length (b) of the vessel rim (4).

2. Vessel according to claim 1, **characterised in that** the profile interior (18) is provided with such radial and vertical dimensions that, when the lid is positioned relative to the vessel (2), the outer rim (10) of the vessel rim (4) and an inner region of the vessel rim (4) are both in contact with respective regions of the profile interior (18) at least in a selected position, a stable open position of the lid (2) being achieved as a result of locking in a selected position of this type.

3. Vessel according to any of the preceding claims, **characterised in that** a bulge (19) projecting into the profile interior (18) is formed in the overlap portion (16), which bulge does not engage with the vessel rim (4) in the closed state.

4. Vessel according to claim 3, **characterised in that** the bend (9) of the vessel rim (4) engages behind the bulge (19) in a selected position.

5. Vessel according to any of the preceding claims, **characterised in that** the contact regions of the overlap portion (16) and of the support portion (14) have radial spacing from each other that corresponds to at least the measurement (b) of the freely projecting vessel rim (4).

6. Vessel according to any of the preceding claims, **characterised in that** the contact regions of the overlap portion (16) and of the support portion (14) have, in addition to the wall thickness of the vessel rim (4), radial spacing from each other that corresponds to at least the measurement (b) of the freely projecting vessel rim (4).

7. Vessel according to any of the preceding claims, **characterised in that** the vessel rim (4) comprises a recess (12) which goes inwards in a stepped manner below the freely projecting bend (9).

8. Vessel according to claim 7, **characterised in that** the support portion (14) is arranged on the inner stepped surface (13) of the recess (12) when the lid is in the closed state.

9. Vessel according to either claim 7 or claim 8, **characterised in that** the support portion (14) rests in cross-section in the stepped inner corner of the recess (12) when the lid is in the closed state.

10. Vessel according to any of the preceding claims, **characterised in that** at least a partial region of the support portion (14) and/or of the overlap portion (16) consists of a flexible plastics material.

11. Vessel according to any of claims 3 to 10, **characterised in that** the bulge (19) consists of a flexible plastics material.

12. Vessel according to any of the preceding claims, **characterised in that** the profile interior (18) has a triangular cross-sectional area (D).

13. Vessel according to any of the preceding claims, **characterised in that** the vessel rim (4) and the lid rim (3) have a rotationally symmetric configuration.

## Revendications

1. Bol (1), en particulier bol mélangeur pour un robot de cuisine avec un couvercle montable de façon étanche (2), le bol (1) présentant un bord (4) plié transversalement vers l'extérieur avec un bord extérieur (10) et le couvercle (2) un bord (3) recouvrant le bord (4) à l'état fermé, le bord (3) présentant encore transversalement une section de recouvrement (16), le bord (3) présentant encore transversalement une section d'appui (14), qui prend appui à l'intérieur du bol à l'état fermé du couvercle, les zones d'appui de la section de recouvrement (16) et de la section d'appui (14) étant décalées en hauteur et, à l'état de contact, un espace libre radial (F) subsistant au-dessus de la section d'appui (14) au bord (4), qui correspond au moins à la moitié de la longueur en porte-à-faux (b) du bord (4), **caractérisé en ce que**, au-dessus du bord (4), à l'état fermé, il subsiste également un espace libre (F') dont l'étendue radiale (c) correspond au moins à la moitié de la longueur en porte-à-faux (b) du bord (4).

2. Bol selon la revendication 1, **caractérisé en ce que** l'espace intérieur du profil (18) est doté de dimensions radiales et verticales telles qu'en cas de placement du couvercle par rapport au bol (2) dans une position sélectionnée, dans tous les cas, le bord extérieur (10) du bord (4) et une zone intérieure du bord (4) sont en même temps en appui sur des zones correspondantes de l'espace intérieur du profil (18), une position d'ouverture stable du couvercle (2) étant obtenue à la suite d'un blocage dans une telle position sélectionnée.

3. Bol selon l'une des revendications qui précèdent, **caractérisé en ce que** dans la section de recouvrement (16) un renflement (19) dépassant dans l'intérieur du profil est formé, lequel, à l'état fermé, n'est pas en prise avec le bord (4).

4. Bol selon la revendication 3, **caractérisé en ce que** dans une position sélectionnée, le pli (9) du bord (4) engage l'arrière du renflement (19).

5. Bol selon l'une des revendications qui précèdent, **caractérisé en ce que** les zones d'appui de la section de recouvrement (16) et de la section d'appui (14) présentent les unes par rapport aux autres une distance radiale correspondant au moins à la dimension (b) du bord (4) en porte-à-faux.

6. Bol selon l'une des revendications qui précèdent, **caractérisé en ce que** les zones d'appui de la section de recouvrement (16) et de la section d'appui (14) présentent les unes par rapport aux autres une distance radiale correspondant au moins à la dimension (b) du bord (4) en porte-à-faux en plus de l'épaisseur de paroi du bord (4).

7. Bol selon l'une des revendications qui précèdent, **caractérisé en ce que** le bord (4) présente au-dessous du pli en porte-à-faux (9) un renfoncement (12) allant graduellement vers l'intérieur.

8. Bol selon la revendication 7, **caractérisé en ce que** la section d'appui (14) est disposée, en position fermée du couvercle, sur la surface intérieure en gradins (13) du renfoncement (12).

9. Bol selon l'une des revendications 7 ou 8, **caractérisé en ce que** la section d'appui (14) est disposée, en position fermée du couvercle, transversalement dans l'angle intérieur en gradins du renfoncement (12).

10. Bol selon l'une des revendications qui précèdent, **caractérisé en ce qu'**au moins une zone partielle de la section d'appui (14) et/ou de la portion de recouvrement (16) est constituée de plastique souple.

11. Bol selon l'une des revendications 3 à 10, **caractérisé en ce que** le renflement (19) est constitué de plastique souple.

12. Bol selon l'une des revendications qui précèdent, **caractérisé en ce que** l'espace intérieur du profil (18) présente une surface transversale (D) en triangle.

13. Bol selon l'une des revendications qui précèdent, **caractérisé en ce que** le bord (4) et le bord (3) sont formés pour avoir une symétrie de révolution.
